# FASCICULE DE BREVET EUROPEEN

(11) **EP 2 219 036 B1**
(45) Date de publication et mention de la délivrance du brevet: **12.03.2014**
(21) Numéro de dépôt: 09152876.0
(22) Date de dépôt: 13.02.2009
(51) Int. Cl.: G01Q 70/02

(54) **Microscope en champ proche multifonctionnel**
Multifunktionsrastersondenmikroskop
Multifunctional Scanning Probe Microscope

(43) Date de publication de la demande: 18.08.2010
(73) Titulaire: NT-MDT Service & Logistics Ltd., Castletroy Limerick (IE)
(72) Inventeur: Bykov, Andrey, 124482 Moscou (RU); Kotov, Vladimir, 124617 Moscou (RU); Bykov, Viktor, 124525 Moscou (RU)
(74) Mandataire: Delamare, Raoul

(56) Documents cités:
- WO-A-93/18525
- JP-A- 5 232 081
- JP-A- 7 134 137
- ROSLEFF BAEKMARK T ET AL: "DESIGN AND CONSTRUCTION OF A HEAT STAGE FOR INVESTIGATIONS OF SAMPLES BY ATOMIC FORCE MICROSCOPY ABOVE AMBIENT TEMPERATURES" REVIEW OF SCIENTIFIC INSTRUMENTS, AIP, MELVILLE, NY, US, vol. 68, no. 1, PART 01, 1 janvier 1997 (1997-01-01), pages 140-142, XP000655669 ISSN: 0034-6748
- KAZUO YOKOYAMA ET AL: "IN SITU TIP EXCHANGE MECHANISM FOR THE DEMUTH-TYPE SCANNING TUNNELING MICROSCOPE" JOURNAL OF VACUUM SCIENCE AND TECHNOLOGY: PART B, AVS / AIP, MELVILLE, NEW YORK, NY, US, vol. 9, no. 2 PART 02, 1 mars 1991 (1991-03-01), pages 623-625, XP000222883 ISSN: 1071-1023

## Description

L'invention concerne des microscopes et, en particulier, des microscopes en champ proche multifonctionnels, dits « MCP », destinés aux études des échantillons dans des différents régimes comme :
- un régime à effet tunnel,
- un régime à force atomique,
- un régime de mesure de la dureté,
- un régime à liquide avec une utilisation des cellules liquides, et
- un régime électrochimique avec une utilisation des cellules électrochimiques.

Un exemple d'un microscope en champ proche multifonctionnel est décrit dans JP07134137A.

En particulier, l'invention concerne un microscope en champ proche multifonctionnel comprenant :
- un soubassement,
- un bloc d'approche préliminaire disposé mobile sur le soubassement,
- un piézoscanneur disposé sur le bloc d'approche préliminaire,
- un porte-objet disposé sur le piézoscanneur,
- un échantillon comprenant une zone de mesures et fixé sur le piézoscanneur à l'aide du porte-objet,
- un plateau fixé sur le soubassement en regard de l'échantillon,
- un analyseur disposé sur le plateau et comprenant une première tête de mesure orientée vers l'échantillon et adaptée à sonder la zone de mesures de l'échantillon.

Un tel dispositif est connu et décrit dans un brevet de la Fédération Russe RU2244332. Son inconvénient consiste en ce qu'un changement des régimes de travail évoqués ci-dessus soit est lié avec une reprise d'un réglage compliqué du dispositif, soit est impossible à faire.

La présente invention, qui s'appuie sur cette observation, a pour but de proposer un microscope en champ proche multifonctionnel permettant au moins à réduire l'une au moins des inconvénients précédemment évoqués. Pour atteindre ce but, le microscope en champ proche multifonctionnel conforme à la définition générique mentionnée ci-dessus, est **caractérisé en ce qu**'il comprend un premier et un deuxième guides fixés sur le plateau, en ce que l'analyseur comprend une deuxième tête de mesure orientée vers l'échantillon et adaptée à sonder la zone de mesures de l'échantillon, et en ce que la première et la deuxième têtes de mesure sont disposées mobiles respectivement sur le premier et le deuxième guides.

Grâce à cet agencement, le microscope en champ proche multifonctionnel est facile à utiliser et dispose des possibilités fonctionnelles élargies car il permet de changer rapidement les régimes de mesure, c'est-à-dire, de passer d'un régime de mesure vers un autre sans refaire le réglage compliqué du dispositif. Ainsi, il suffit pour un opérateur d'avoir des acquis minimaux pour utiliser le microscope en champ proche multifonctionnel selon l'invention ce qui augmente une robustesse du dispositif et réduit un risque de défaillance du dispositif, par exemple, à cause de la reprise fréquente de son réglage par l'opérateur.

Il existe une variante de l'invention dans laquelle le microscope en champ proche multifonctionnel comprend un bloc optique fixé sur le soubassement et comprenant :
- un module laser,
- des premiers guides bicoordonnés orientés vers l'échantillon et fixés sur le module laser,
- un laser disposé mobile sur les premiers guides bicoordonnés et pouvant présenter un couplage optique avec la zone de mesures de l'échantillon,
- un module de réception,
- des deuxièmes guides bicoordonnés orientés vers l'échantillon et fixés sur le module de réception,
- un récepteur photoélectrique disposé mobile sur les deuxièmes guides bicoordonnés et pouvant présenter un couplage optique avec la zone de mesures de l'échantillon.

Il existe aussi une variante de l'invention dans laquelle, dans le microscope en champ proche multifonctionnel, le plateau comprend :
- une première table bicoordonnée liant le module d'approche préliminaire au soubassement,
- une deuxième table bicoordonnée, et
- un microscope optique fixé sur la deuxième table bicoordonnée.

Il existe aussi une variante de l'invention dans laquelle le plateau comprend des butées avec des vis mobiles. Dans ce cas les première et deuxième têtes de mesure sont adaptées à :
- coulisser linéairement le long du premier et du deuxième guides respectivement jusqu'aux butées, et/ou
- se déplacer de manière radiale par rapport au premier et au deuxième guides respectivement.

Il existe aussi une variante de l'invention dans laquelle le microscope en champ proche multifonctionnel comprend :
- un module à liquide,
- un récipient avec un liquide,
- un capteur,
   dans ce cas :

- le capteur est disposé sur le plateau,
- le module à liquide est disposé de manière orientée sur le capteur,
- le récipient avec le liquide est fixé sur le porte-objet et est lié avec l'analyseur.

Il existe aussi une variante de l'invention dans laquelle le microscope en champ proche multifonctionnel comprend un module de mesure de dureté disposé de manière orientée sur le capteur.

Il existe aussi une variante de l'invention dans laquelle, dans le microscope en champ proche multifonctionnel, les première et deuxième têtes de mesure simultanément disposées sur les premier et deuxième guides respectivement, sont les têtes d'au moins un des types mentionnés ci-après : (a) tête à effet tunnel dans laquelle la sonde est réalisée en forme d'une pointe et le support de la sonde est réalisé en forme d'une serre de la pointe ; (b) tête à force atomique dans laquelle la sonde est réalisée en forme d'un cantilever et le support de la sonde est réalisé en forme d'une serre du cantilever.

Il existe aussi une variante de l'invention dans laquelle le microscope en champ proche multifonctionnel comprend :
- un bloc de chauffe,
- un thermocouple,
- un mesureur de température sans contact,
   dans ce cas :

- le bloc de chauffe est disposé sur le porte-objet,
- le thermocouple est fixé sur le bloc de chauffe,
- le mesureur de température sans contact est couplé de manière optique avec l'échantillon.

Il existe aussi une variante de l'invention dans laquelle, dans le microscope en champ proche multifonctionnel, est introduit une serre de précision de la pointe comprenant :
- un bras support avec une rigole en forme de V prolongée suivant une directrice centrale et présentant des microrugosités d'une première grandeur prédéterminée,
- une vis prolongée selon un axe longitudinal, disposée dans le bras support et liée avec la rigole en forme de V.

Il existe aussi une variante de l'invention dans laquelle la vis a un filetage à droite et l'axe longitudinal de la vis est translaté par rapport à la directrice centrale de la rigole en forme de V.

De manière alternative, il existe aussi une variante de l'invention dans laquelle la vis a un filetage à gauche et l'axe longitudinal de la vis est translaté par rapport à la directrice centrale de la rigole en forme de V.

Il existe aussi une variante de l'invention dans laquelle la vis comprend un côté, la surface limite duquel présente des microrugosités d'une deuxième grandeur prédéterminée supérieure à la première grandeur prédéterminée propre aux microrugosités de la rigole en forme de V.

De manière alternative, il existe aussi une variante de l'invention dans laquelle la vis comprend un côté, la surface limite duquel présente des microrugosités d'une deuxième grandeur prédéterminée inférieure à la première grandeur prédéterminée propre aux microrugosités de la rigole en forme de V.

Il existe aussi une variante de l'invention dans laquelle, dans le microscope en champ proche multifonctionnel, est introduit une première serre de précision du cantilever comprenant :
- une première base,
- une deuxième base avec un biais,
- une première lame,
- un élément à ressort, dans ce cas :

- la première base, la deuxième base avec le biais et l'élément à ressort sont fixés sur la première lame et sont adaptés à interagir avec le cantilever,
- l'élément à ressort est disposé en regard de la première base.

Il existe aussi une variante de l'invention dans laquelle, dans le microscope en champ proche multifonctionnel, est introduit une deuxième serre de précision du cantilever comprenant :
- une troisième base,
- une quatrième base avec un biais,
- une deuxième lame,
- un excentrique avec un élément élastique, et dans ce cas :

- la troisième base, la quatrième base avec le biais et l'excentrique avec l'élément élastique sont fixés sur la deuxième lame et sont adaptés à interagir avec le cantilever,
- l'excentrique est disposé sur la deuxième lame en regard de la quatrième base avec le biais.

Il existe aussi une variante de l'invention dans laquelle, dans le microscope en champ proche multifonctionnel, la première et la deuxième têtes de mesure comprennent des entraînements mécanisés.

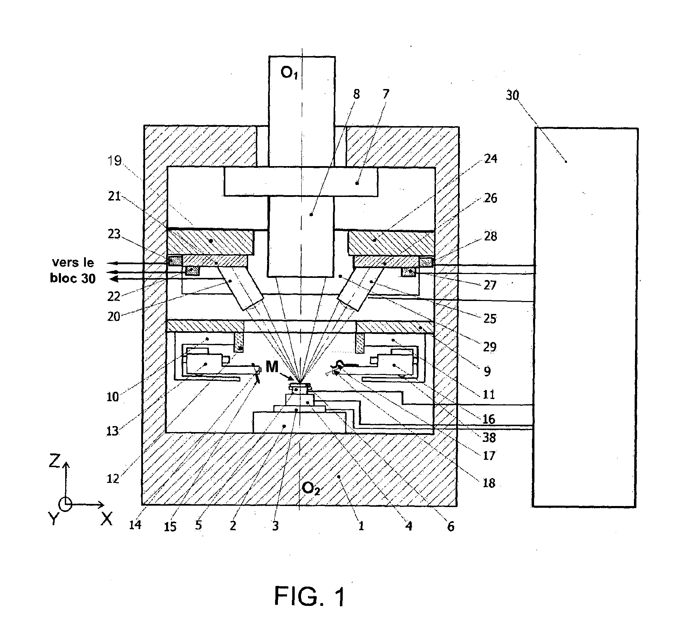

D'autres caractéristiques et avantages de l'invention ressortent de la description qui en est faite ci-après pour illustrer le fond de l'invention et qui n'est pas limitative pour cette dernière, avec des références aux figures 1-14 annexées.

Une vue principale simplifiée avec une coupe partielle d'un microscope en champ proche multifonctionnel selon l'une des versions de l'invention, est représentée schématiquement sur la figure 1.

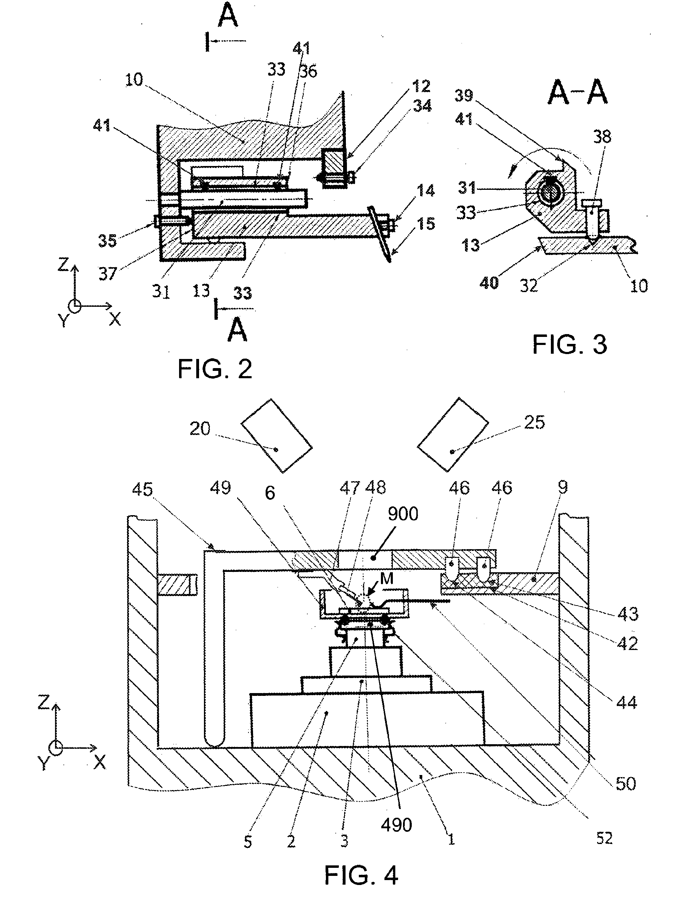

Une vue principale simplifiée en coupe d'un premier guide avec une première tête de mesure selon l'une des versions de l'invention, est représentée schématiquement sur la figure 2.

Une coupe dans un plan A-A du premier guide avec la première tête de mesure selon la figure 2, est représentée schématiquement sur la figure 3.

Une vue principale simplifiée avec une coupe partielle d'une version d'un capteur avec un module à liquide, est représentée schématiquement sur la figure 4.

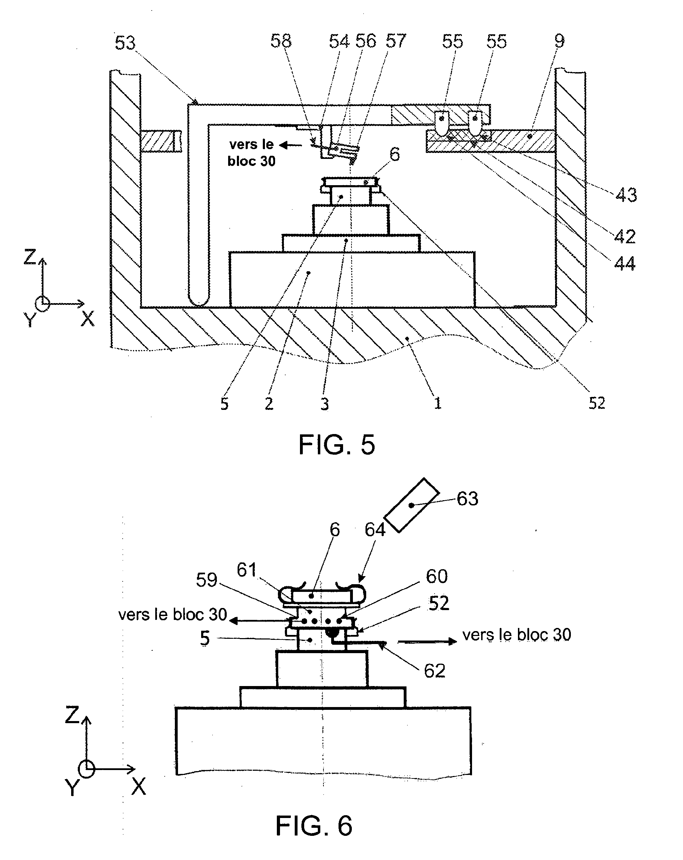

Une vue principale simplifiée avec une coupe partielle d'une version d'un capteur avec un module de mesure de dureté, est représentée schématiquement sur la figure 5.

Une vue principale d'un bloc de chauffe selon l'une des versions de l'invention avec un échantillon fixé sur le porte-objet, est représentée schématiquement sur la figure 6.

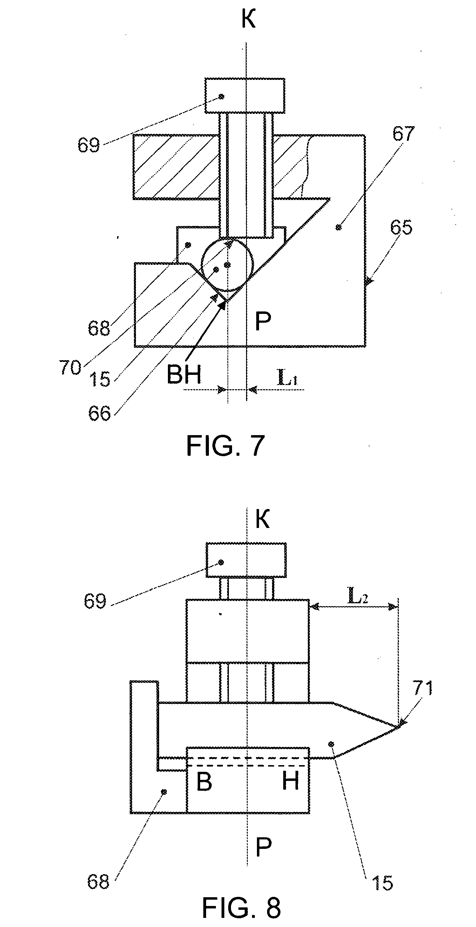

Une variante parmi des variantes d'une serre de précision d'une pointe, en vue du côté de son sommet avec une coupe partielle, est représentée schématiquement sur la figure 7.

Une vue de côté de la serre de précision de la pointe selon la figure 2, est représentée schématiquement sur la figure 8.

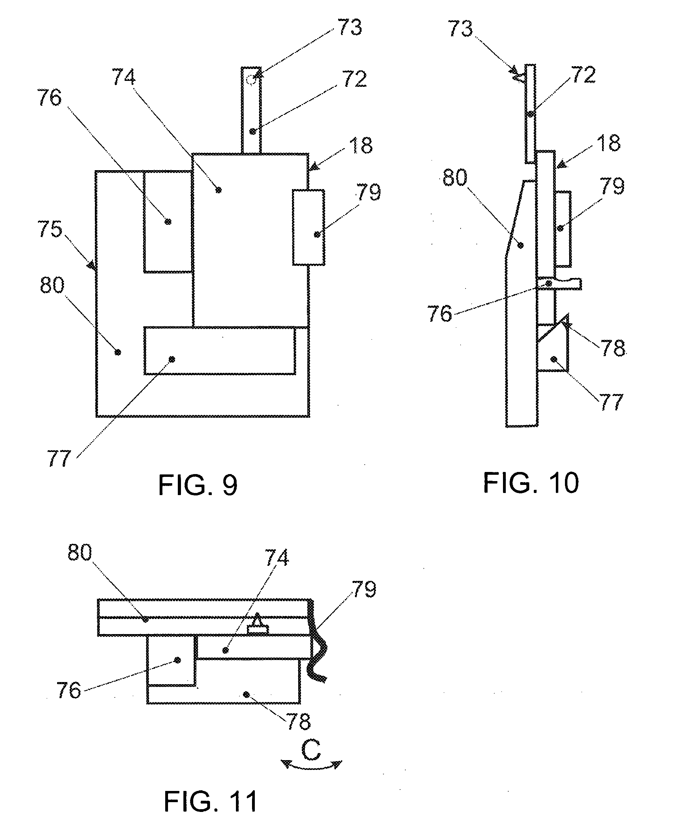

Une première variante (à ressort) d'une première serre de précision d'un cantilever en vue du côté d'un plateau, est représentée schématiquement sur la figure 9.

Une vue de côté de la première serre de précision du cantilever selon la figure 9, est représentée schématiquement sur la figure 10.

Une vue de dessus de la première serre de précision du cantilever selon la figure 9, est représentée schématiquement sur la figure 11.

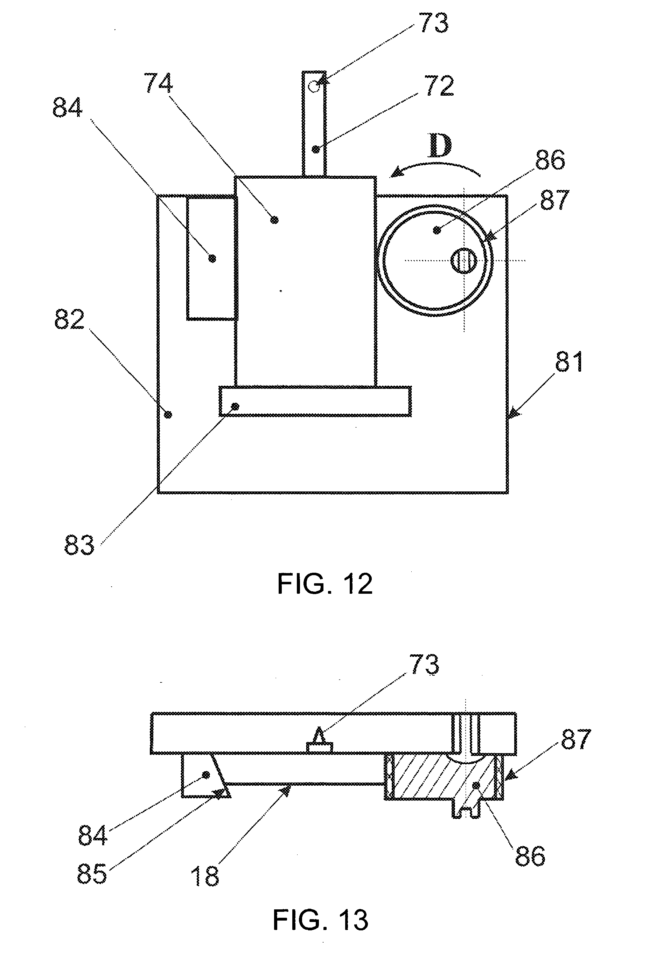

Une deuxième variante (à excentrique) d'une deuxième serre de précision du cantilever en vue du côté du plateau, est représentée schématiquement sur la figure 12.

Une vue de dessus avec une coupe partielle de la deuxième serre de précision du cantilever selon la figure 12, est représentée schématiquement sur la figure 13.

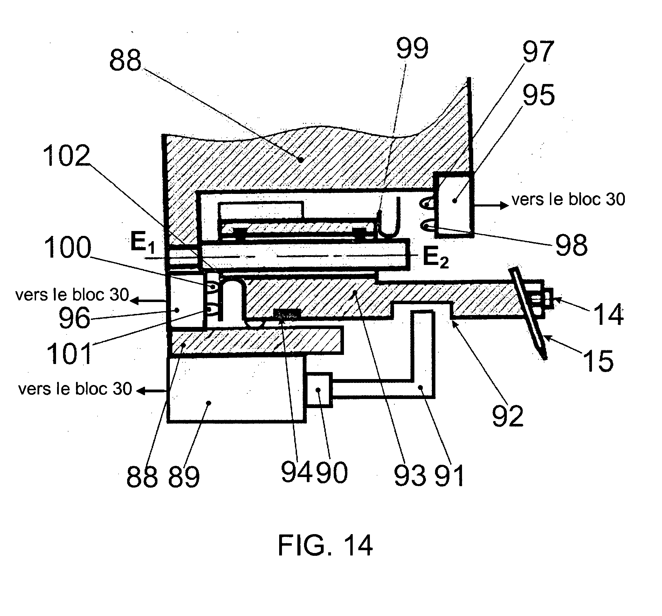

Une vue principale simplifiée avec une coupe partielle d'une variante motorisée des têtes de mesures, est représentée schématiquement sur la figure 14.

Comme évoqué ci-dessus et illustré sur les figures 1-14, l'invention concerne des microscopes en champ proche multifonctionnels, dits « MCP », destinés aux études des échantillons dans des différents régimes.

Le microscope en champ proche multifonctionnel représenté sur la figure 1 comprend un soubassement 1 sur lequel est disposé une première table bicoordonnée 2 (disposée dans un plan XY sur la figure 1). Cette table 2 peut avoir un entraînement manuel, un entraînement piézoinertiel ou un moteur électromécanique, par exemple, un moteur pas à pas. La première table bicoordonnée 2 peut comporter deux chariots mobiles disposés l'un sur l'autre, avec des guides de roulement, de glissement ou des guides élastiques avec des ressorts plats. Les guides de glissement sont utilisés plus fréquemment que les autres pour réduire des jeux dans des assemblages. Les uns des guides de glissement sont disposés sur un bas côté de la première table bicoordonnée 2 (par exemple, une rigole en forme de V et un plan). Sur ces guides glissent, par exemple, des billes fixées dans un chariot mobile sur lequel sont disposés les autres des guides de glissement sur lesquels est installé un autre chariot mobile avec des billes (une représentation détaillée de la première table bicoordonnée 2 n'est pas illustrée sur la figure 1). Dans cette configuration, il est opportun d'utiliser les standards moteurs pas à pas pour déplacer les chariots. Une étendue de déplacement de la première table bicoordonnée 2 peut dépasser les dimensions d'un échantillon, par exemple, de 10⁻² m. Dans certains cas, un chariot tournant peut être installé sur la première table bicoordonnée 2 pour tourner l'échantillon dans le plan XY. Un bloc d'approche préliminaire 3 comprenant un piézoscanneur 4 est fixé sur la première table bicoordonnée 2. Un porte-objet 5 est disposé sur le piézoscanneur 4.

L'échantillon 6 comprenant au moins une zone de mesures M peut être disposé sur le porte-objet 5. Des moyens de fixation de l'échantillon 6 au porte-objet 5 peuvent être variés. Le plus souvent on utilise des pattes de serrage à ressort. Mais une colle ou une bande adhésive double face peut être utilisée. Dans ce cas, une face de la bande adhésive est collée au porte-objet 5 et une autre face est collée à l'échantillon 6 (non représenté). Il est possible d'utiliser des porteurs (non représenté) d'échantillons 6 sur lesquels les échantillons 6 sont fixés avec la même colle ou les pattes à ressort, et ensuite le porteur avec l'échantillon 6 est installé sur le porte-objet 5. Une telle variante est utilisée lorsqu'il est difficile de saisir les échantillons avec une pince (par exemple, à cause des dimensions réduites des échantillons 6) et de disposer rapidement sur le porte-objet 5. Or, les porteurs d'échantillons 6 peuvent avoir des serres accommodées à la pince ou être aimantées pour une fixation magnétique sur le porte-objet 5. Dans ce cas le porte-objet 5 peut comporter un aimant ou peut être fabriqué lui-même en matériau magnétique.

Le bloc d'approche préliminaire 3 et le piézoscanneur 4 se présentent comme des principaux moyens électromécaniques de la microscopie en champ proche. Habituellement, on utilise, en tant que piézoscanneur, des tubes piézocéramiques sectionnées ou des paquets des lamelles piézocéramiques cuites qui assurent des déplacement X, Y, Z (par exemple, orthogonaux). Le plus souvent on utilise les tubes piézocéramiques sectionnées (non représentés sur les figures). Leurs tailles caractéristiques : longueur 3*10⁻¹ m, diamètre extérieur 10⁻² m, diamètre intérieur 9*10⁻² m. Une partie du tube est recouverte par des électrodes continues (à l'extérieur et à l'intérieur du tube), le tube s'allonge ou se rétrécit lorsqu'une tension est appliquée sur les électrodes. Une autre partie du tube comprend quatre électrodes sur une face extérieure et quatre électrodes sur une face intérieure, disposées en regard les unes par rapport aux autres. En appliquant la tension sur elles, il est possible de commander les dimensions des fragments des tubes piézocéramiques et de les courber. Ainsi s'opère un déplacement d'un côté du tube piézocéramique séctionné avec le porte-objet 5 selon les coordonnées X, Y, Z. Le bloc d'approche préliminaire 3 peut être fabriqué à l'aide des entraînements inertiels, différentiels etc. Dans le cas présent, un entraînement mécanique avec un moteur pas à pas et une transmission par vis vers un chariot disposé sur des guides (non représenté), sera le plus efficace. Dans ce cas le moteur pas à pas sera disposé sur la première table bicoordonnée 2. On y fixe également le guide sur lequel peut glisser, serré contre lui à l'aide, par exemple, d'un ressort, le chariot muni d'un écrou. Un tel entraînement est similaire à l'un des entraînements de la première table bicoordonnée 2. Un pas minimal d'approche doit être inférieur à 10⁻⁶ m pour que, lors d'un processus d'entraînement, le priézoscanneur 4 ait assez de temps de reculer et éviter ainsi une cassure d'une sonde.

Il convient de noter que le soubassement 1 sur la figure 1 est représenté de manière schématique. Il peut être composé de deux éléments assemblés (une dalle inférieure et un couvercle), comporter des ouvertures pour installer l'échantillon et un autre équipement. Ces éléments assemblés n'ont pas de rapport avec le fond de l'invention et, de ce fait, ne sont pas représentés sur les figures.

Un microscope optique 8 est disposé sur le soubassement 1 à l'aide d'une deuxième table bicoordonnée 7 (disposée dans un plan XY sur la figure 1). Comme illustré sur la figure 1, un axe optique O₁O₂ du microscope optique 8 est perpendiculaire à l'échantillon 6 et traverse sa zone de mesures M. La deuxième table bicoordonnée 7 peut être analogue à la première table bicoordonnée 2 décrite ci-dessus. Sur le soubassement 1, en regard de l'échantillon 6, est fixé un plateau 9 comprenant du côté de l'échantillon 6 un premier 10 et un deuxième 11 guides ainsi que deux butées 12. Le plateau 9 peut être solidaire avec le soubassement 1, par exemple, à l'aide d'une soudure ou des vis (non représenté). Comme illustré sur la figure 1, le plateau 9 comprend une ouverture de service 900 permettant un couplage optique du microscope optique 8 avec l'échantillon 6. Sur le premier guide 10 est disposé une première tête de mesure 13 avec une serre 14 d'une première sonde réalisée, par exemple, en forme d'une pointe 15 pour des mesures à effet tunnel. Dans ce cas, la serre 14 de la première sonde sera identifiée comme la serre 14 de la pointe 15. La première tête de mesure 13 est orientée vers l'échantillon 6 et adaptée à sonder la zone de mesures M de l'échantillon 6. Sur le deuxième guide 11 est disposé une deuxième tête de mesure 16 avec une serre 17 d'une deuxième sonde réalisée, par exemple, en forme d'un cantilever 18 pour des mesures à force atomique. Dans ce cas, la serre 17 de la deuxième sonde sera identifiée comme la serre 17 du cantilever 18. La deuxième tête de mesure 16 est orientée vers l'échantillon 6. Dans le cas le plus simple, la serre 14 de la pointe 15 peut être réalisée en forme d'une vis de serrage et la serre 17 du cantilever 18 peut être réalisée en forme d'un ressort. Les première 13 et deuxième 16 têtes de mesure représentent un analyseur. L'utilisation de la deuxième table bicoordonnée 7 ainsi que des première 13 et deuxième 16 têtes de mesure disposées mobiles respectivement sur le premier 10 et le deuxième 11 guides et couplées avec les butées 12, permet de changer rapidement les régimes de mesure et la zone de mesure M de l'échantillon 6 ce qui élargit des possibilités fonctionnelles de MCP.

Sur le soubassement 1 est fixé un module laser 19 comprenant, du côté du plateau 9, un laser 20 disposé mobile sur des premiers guides bicoordonnés 21 et étant lié avec un premier 22 et un deuxième 23 entraînements. Sur le soubassement 1 est fixé un module de réception 24 comprenant un récepteur photoélectrique 25 disposé mobile sur des deuxièmes guides bicoordonnés 26 et étant lié avec un troisième 27 et un quatrième 28 entraînements. Une telle réalisation permet de réaliser un réglage rapide (couplage optique via l'ouverture de service 900 du plateau 9) :
- d'un rayon du laser 20 sur la zone de mesure M de l'échantillon 6 et, en particulier, sur le cantilever 18 disposé dans la zone de mesures M, et
- du récepteur photoélectrique 25 sur un rayon laser réfléchi de la zone de mesures M de l'échantillon 6 et, en particulier, du cantilever 18 disposé dans la zone de mesures M, après le changement de régimes de travail.
   Cela élargit les possibilités fonctionnelles du dispositif. Le module laser 19 et le module de réception 24 représentent un bloc optique 29.

Une fixation solidaire du module laser 19 et du module de réception 24 sur le soubassement 1 peut être réalisée à l'aide de vis qui ne sont pas représentées à des fins de simplification de dessins. De même, les première 2 et deuxième 7 tables bicoordonnées peuvent être fixées sur le soubassement 1. Les premiers guides bicoordonnés 21 et les deuxièmes guides bicoordonnés 26 sur les figures 1, orientés respectivement vers le plateau 9 et, par conséquent, vers l'échantillon 6, sont représentés de manière schématique. Ils peuvent être réalisés en forme de deux chariots indépendants, installés l'un sur l'autre et couplés respectivement :
- l'un avec les premier 22 et deuxième 23 entraînements,
- l'autre avec les troisième 27 et quatrième 28 entraînements.
   Les premiers guides bicoordonnés 21 avec les premier 22 et deuxième 23 entraînements, d'une part, et les deuxièmes guides bicoordonnés 26 avec les troisième 27 et quatrième 28 entraînements, d'autre part, peuvent être analogues avec les première 2 et deuxième 7 tables bicoordonnées.

On peut utiliser un laser à hélium-néon avec une longueur d'onde égale à 0.6328*10⁻⁶ m en tant que laser 20, et un récepteur photoélectrique avec une étendue de réception comprenant cette longueur d'onde en tant que récepteur photoélectrique 25. Aussi, des lasers infrarouges, des conducteurs photoélectriques infrarouges et des conducteurs de lumière infrarouges peuvent être utilisés, ainsi un processus d'observation d'une zone de déplacement sera amélioré à cause d'élimination de son exposition parasite dans une partie du spectre visible par l'oeil d'opérateur.

Le laser 20 et le récepteur photoélectrique 25 peuvent être couplés de manière optique (via l'ouverture de service 900 du plateau 9) respectivement avec les première 13 et deuxième 16 têtes de mesure dans la zone de mesure M et, plus particulièrement, avec leurs sondes, c'est-à-dire, avec la pointe 15 et le cantilever 18 respectivement. Le couplage optique de la pointe 15 avec le laser 20 peut jouer un rôle auxiliaire, par exemple pour un éclairage supplémentaire de la zone de mesure.

Les première 13 et deuxième 16 têtes de mesure peuvent être simultanément disposées sur les premier 10 et deuxième 11 guides respectivement. Dans ce cas les deux têtes de mesure (et la première 13, et la deuxième 16) peuvent être de même type, par exemple, les deux peuvent être les têtes à effet tunnel (non représentées sur les dessins), ou les deux peuvent être les têtes à force atomique (non représentées sur les dessins). Grâce à cela les deux têtes de mesure (et la première 13, et la deuxième 16) sont interchangeables. Cela permet lors d'un endommagement (par exemple, en cas d'un émoussement de la pointe 15 dans le régime à effet tunnel) au cours des mesures, par exemple, de la première tête de mesure 13, ne pas gaspiller du temps pour son remplacement. Il suffit de l'éloigner de l'échantillon 6, puis d'approcher la deuxième tête de mesure 16 vers l'échantillon 6 et de poursuivre aussitôt les mesures interrompues dans le même régime. La possibilité de minimiser le temps perdu à cause de la défaillance de la première tête de mesure 13 et de poursuivre les mesures dans ce même régime pratiquement sans interruption est particulièrement importante lorsque les caractéristiques de l'échantillon 6 évoluent rapidement avec le temps. Cela élargit les possibilités fonctionnelles de MCP.

De manière alternative, l'une des têtes de mesure (par exemple, la première 13, comme illustré sur la figure 1) peut être la tête à effet tunnel, et l'autre (par exemple, la deuxième, comme illustré sur la figure 1) peut être la tête à force atomique. Grâce à cela, il est possible de changer rapidement le régime de mesures à effet tunnel de l'échantillon 6 contre celui à force atomique et vice versa, en alternant ainsi un régime de mesure avec un autre régime de mesures. Cela élargit les possibilités fonctionnelles de MCP.

Les éléments asservis référencés 5, 22, 23, 27, 28, 29 sur les dessins 3 et 4 et décrits ci-dessus, sont branchés à un bloc de commande 30 (contrôleur). Les première 2 et deuxième 7 tables coordonnées et, plus particulièrement, leurs moteurs pas à pas, ainsi que le cantilever 18 peuvent également être branchés au bloc de commande 30. En outre, la pointe 15 est branchée au bloc de commande 30. Ces branchements ne sont pas représentés sur la figure 1 à des fins de simplification de dessins. Le contrôleur assure des fonctions standardisées des microscopes en champ proche. Il peut inclure deux convertisseurs analogiques numériques, dits CAN, des amplificateurs de déviation du piézoscanneur avec un convertisseur numérique analogique, dit CNA, et un amplificateur haute tension, une chaîne d'asservissement avec des amplificateurs et un intégrateur, des multiplexeurs commutant les signaux, des amplificateurs d'entrée, des filtres de signaux, des convertisseurs de signaux, un bloc de gestion d'entraînement avec deux CNA, un bloc de gestion des moteurs pas à pas et un stabilisateur de température.

Le premier guide 10 (figures 1-3) et le deuxième guide 11 (figure 1) peuvent comporter des tiges cylindriques 31 ainsi que des glissières 32 en forme de V. Dans ce cas, la première tête 13 de mesure (figures 1-3) et la deuxième tête 16 de mesure peuvent avoir des canaux cylindriques de guidage 33. Les butées 12 peuvent comporter, sur les premier 10 et deuxième 11 guides, des premières vis 34 pouvant être régulées en déplacement selon la coordonnée X et coopérant avec des premières faces 36. Une fois le réglage par déplacement réalisé, la première vis 34 peut être fixée avec un contre-écrou (non représentée). Des secondes vis 35 peuvent coopérer avec des secondes faces 37. Des troisièmes vis 38 sont disposées sur les première 13 et deuxième 16 têtes de mesure (figure 1) et coopèrent avec les glissières 32 en forme de V. Des couples frictionnels dans les premier 10 et deuxième 11 guides peuvent être réalisés par des paires de matériaux suivants : acier-laiton, acier-bronze, acier-acier, polycor-acier ou polycor-bronze. Les premère 13 et deuxième 16 têtes de mesures sont réalisées basculantes. Ainsi, elles peuvent pivoter (par rapport aux premier 10 et deuxième 11 guides respectivement) autour des tiges 31 jusqu'à ce que des saillies 39 buttent contre des bords 40 (figure 3). Cela permet d'effectuer un changement rapide (chargement) des sondes (hors zone de mesure) et, donc, changer les régimes de travail de manière rapide et simple. Des coussinets frictionnels 41 réalisés, par exemple, en plastique fluoré ou caprolone, peuvent être fixés dans les têtes 13 et 16 pour réduire des jeux.

A part les premier 10 et deuxième 11 guides, un capteur 42 (figure 4) comprenant une rigole sphérique 43 et une rigole 44 en forme de U allongée suivant la coordonnée Y (le capteur 42 n'est pas représenté sur la figure 1), peut être disposé sur le plateau 9. Un module 45 à liquide est installé dans le capteur 42 par l'intermédiaire des rotules d'articulation 46. Le module 45 à liquide comprend une serre 47 d'une troisième sonde. La troisième sonde est réalisée, par exemple, en forme d'un cantilever 48 pour des mesures dans le liquide couplé de manière optique avec le laser 20 et le récepteur photoélectique 25. Le cantilever 48 pour les mesures dans le liquide peut être collé dans la serre 47 de la troisième sonde.

Dans ce cas, un récipient 49 avec le liquide sera fixé sur le porte-objet 5 dans lequel l'échantillon 6 est installé par l'intermédiaire d'une patte de serrage 50 (figure 4). Le récipient 49 est couplé de manière optique avec l'analyseur et, par conséquent, avec le laser 20 et le récepteur photoélectrique 25. Le récipient 49 peut être réalisé en quartz ou en plastique fluoré. Des premières pattes de serrage 52, une bande collante ou un aimant dans le fond du récipient (non représenté) peuvent être utilisés pour fixer le récipient 49 sur le porte-objet 5. La partie inférieure du récipient 49 orientée vers le porte-objet 5 peut comporter une semelle métallique 490, par exemple collée au récipient 49 du côté du porte-objet 5. Cette semelle métallique 490 est adaptée au contact direct avec les premières pattes de serrage 52 (figure 4). Ces mêmes premières pattes de serrage 52 peuvent être utilisées pour fixer l'échantillon 6 sur la figure 1.

Le capteur 42 est représenté de manière schématique sur la figure 4. Les rotules d'articulation 46 peuvent être déplacées l'une par rapport à l'autre selon la coordonnées Y. Le capteur 42 peut aussi être disposé sur le soubassement 1 et les rotules d'articulation peuvent aussi être disposées dans le bas du module 45 à liquide (non représenté).

Grâce à la disposition de manière orientée selon les coordonnées du module 45 à liquide, MCP est adapté aux mesures dans les milieux liquides ou aux mesures électrochimiques, ce qui élargit ses possibilités fonctionnelles.

Comme une alternative par rapport au module 45 à liquide, un module de mesure de dureté 53 avec une serre 54 d'une quatrième sonde et des rotules d'articulation 55 peut être disposé sur ce même capteur 42, sur le plateau 9 (figure 5).

Un résonateur à quartz 56 avec la pointe 57 peut être utilisé en tant que la quatrième sonde. Cela élargit aussi les possibilités fonctionnelles du dispositif. Une fixation du résonateur à quartz 56 dans la serre 54 peut être réalisée, par exemple par collage. Les sorties 58 du résonateur à quartz 56 sont branchées au bloc de commande 30.

L'installation du module 45 à liquide et du module de mesure de dureté 53 sur le plateau 9 s'opère de manière alternative lorsque les première 13 et deuxième 16 têtes de mesure sont écartées dans des directions différentes (figure 1). Pour simplifier les dessins, les premier 10 et deuxième 11 guides ainsi que les première 13 et deuxième 16 têtes ne sont pas représentés sur les figures 4-5.

Dans une variante de réalisation de l'invention, un bloc de chauffe 59 (figure 6) avec l'échantillon 6 est fixé sur le porte-objet 5. Le bloc de chauffe 59 peut comporter, comme réchauffeur, une spirale 60 métallique (en particulier, nichromique) cuite dans un support 61 en matériau isolant (par exemple, céramique). Le support 61 est lié avec un thermocouple 62. Le thermocouple 62 est adapté à mesurer la température du support 61. Le thermocouple 62 est isolé électriquement par rapport au porte-objet 5 et au bloc de chauffage 59 (non représenté sur la figure 6). Comme une variante alternative, il est possible d'utiliser un mesureur de température sans contact 63 (un pyromètre optique ou un thermomètre infrarouge) pour mesurer la température du support 6 de son côté de travail (c'est-à-dire, orienté vers les première 13 et deuxième 16 têtes de mesure), ce qui augmente la précision de mesure et élargit les possibilités fonctionnelles de l'instrument. Le mesureur de température sans contact 63 peut être disposé hors soubassement 1 et être couplé de manière optique avec l'échantillon 6 via une fenêtre transparente optique agencée dans le soubassement 1 (non représenté). L'échantillon 6 peut être fixé sur le bloc de chauffe 59 par des deuxièmes pattes de serrage 64. Il convient de noter que le bloc de chauffe 59 est réalisé démontable rapidement et peut être utilisé pour tous les régimes de mesures ce qui élargit les possibilités fonctionnelles de MCP.

La fixation rapide du bloc de chauffe 59 sur le porte-objet 5 peut être réalisé par l'intermédiaire des premières pattes de serrage 52.

Dans l'une des variantes (figures 7-8), il est possible d'utiliser une disposition de manière orientée selon les coordonnées de la pointe 15 dans une serre de précision 65 de la pointe 15. La serre de précision 65 de la pointe 15 comprend :
- un bras support 67 avec une rigole 66 en forme de V prolongée suivant une directrice centrale BH et présentant des microrugosités (en particulier une hauteur des microrugosités selon un axe longitudinal KP) d'une première grandeur prédéterminée,
- une vis 69 prolongée selon l'axe longitudinal KP, disposée dans le bras support 67 et liée avec la rigole 66 en forme de V.

La vis 69 comprend un côté 70 avec une surface limite orientée vers la directrice central BH. La surface limite du côté 70 présente des microrugosités (en particulier, une hauteur des microrugosités selon l'axe longitudinal KP) d'une deuxième grandeur prédéterminée.

Il convient de noter que la rigole 66 peut être en formes de U ou de n (non représentée sur les dessins), cependant on utilise plus fréquemment les rigoles en forme de V comme les plus technologiques.

Les pointes 15 d'une longueur unique pour les mesures à effet tunnel peuvent être fabriquées au préalable. Cela peut être réalisé par un polissage des extrémités libres de la pointe 15 (opposées à son sommet 71) avec un contrôle ultérieur d'une longueur de la pointe 15 sous le microscope optique 8. La pointe 15 peut être disposée dans la rigole 66 en forme de V du bras support 67 jusqu'à la butée 68 et serrée par la vis 69. Dans ce cas, la vis 69 peut être liée avec la rigole 66 en forme de V et, par conséquent, avec la pointe 15. Pour éviter que, lors du serrage dans le bras support 67, la pointe 15 ne s'éloigne pas de la butée 68, la vis 69 (l'axe longitudinal KP de la vis 69) est translatée par rapport à la directrice centrale BH de la rigole 66 en forme de V sur une distance L₁ ∼ 10⁻³ m lorsque la vis 69 a un filetage à droite (par exemple, égal à M2) (figure 2). Ainsi, au cours de la fixation de la pointe 15 dans le bras support 67, l'extrémité en révolution (la surface limite orientée vers la pointe 15) du côté 70 de la vis 69 munie du filetage à droite exerce une force sur la pointe 15 orientée en direction de la butée 68. Cela assure un contact fiable entre la pointe 15 et la butée 68.

En outre, il existe une possibilité alternative d'utiliser un filetage à gauche sur la vis 69 et, par conséquent, dans le bras support 67. Dans ce cas, lors de la fixation de la pointe 15, elle peut se déplacer dans la direction opposée à la butée 68. Cela peut s'avérer nécessaire dans le cas où les mesures à effet tunnel s'opèrent en utilisant plusieurs fois la même pointe 15. Dans ce cas, on coupe le bout émoussé 71 (sommet) de la pointe 15 avec des ciseaux, de ce fait elle se raccourcit. Pour conserver un positionnement du sommet 71 de la pointe 15, il est possible de la déplacer à l'opposé de la butée 68, au cours de sa fixation dans le bras support 67. Dans ce cas, l'extrémité inactive de la pointe 15 sera écartée de la butée 68 (non représenté sur la figure 8). Ce déplacement peut atteindre la valeur de 1,5*10⁻³ m pour le filetage à gauche de la vis 69 égal à M3*0,5 et le diamètre de la pointe 15 de l'ordre de 0,5*10⁻³ m, ce qui assure une volée L₂ constante de la pointe 15 après ses découpages, par exemple après quatre ou cinq découpages. La pointe se raccourcit d'environ 0,5*10⁻³ m après le découpage soigné. Il convient de noter que la deuxième grandeur évoquée ci-dessus de la surface limite du côté 70 doit être supérieure à la première grandeur des microrugosités de la rigole 66 en forme de V pour permettre le déplacement contrôlé de la pointe 15 suivant la directrice centrale BH au cours de sa fixation (afin d'assurer la volée L₂ constante de la pointe 15 après ses découpages). En particulier, la hauteur, suivant l'axe longitudinal KP, des microrugosités de la rigole 66 en forme de V peut être bornée de 10⁻⁶ m à 5*10⁻⁶ m, et la hauteur, suivant l'axe longitudinal KP, des microrugosités de la surface limite du côté 70 peut être bornée de 2*10⁻⁵ m à 10⁻⁴ m. Dans ce cas, les microgravités de la surface limite du côté 70 vont harper la pointe 15 et la déplacer, le long de la rigole 66 en forme de V suivant la direction de la directrice centrale BH, quasiment sans subir de la résistance de la part des microrugosités propres à la rigole 66 en forme de V.

Dans le cas où le déplacement de la pointe 15 durant sa fixation dans le bras support 67 n'est pas nécessaire, la deuxième grandeur évoquée ci-dessus de la surface limite du côté 70 doit être inférieure à la première grandeur des microrugosités de la rigole 66 en forme de V. En particulier, la hauteur, suivant l'axe longitudinal KP, des microrugosités de la rigole en forme de V peut être bornée de 2*10⁻⁵ m à 10⁻⁴ m, et la hauteur, suivant l'axe longitudinal KP, des microrugosités de la surface limite du côté 70 peut être bornée de 10⁻⁶ m à 5*10⁻⁶ m.

La serre de précision 65 de la pointe 15 peut être réalisée en forme d'un module détaché et peut être fixée sur la première tête de mesure 13. Pour cela un endroit de montage (non représenté) peut être agencé dans la première tête 13 de mesure pour y fixer la serre de précision 65 de la pointe 15, par exemple à l'aide de vis.

L'une des variantes de montage du cantilever 18 pour les mesures à force atomique est représentée sur les figures 9-11. Le cantilever 18 comprend un chip 74, une console 72 dont l'une des extrémités est solidaire avec le chip 74 et l'autre présente un appointage 73. Des technologies groupées de la microélectronique assurent une longueur de la console 72 optimisée aux mesures à force atomique, et un rattachement coordonnée de l'appointage 73 par rapport au chip 74. Les technologies groupées consistent en ce que le chip 74, la console 72 et l'appointage 73 sont réalisés par une méthode de photolithographie. Dans ce cas, un chevauchement séquentiel des dessins topologiques s'opère avec un taux d'imprécision ne dépassant pas 10⁻⁶ m. Par conséquent, l'incertitude d'emplacement de l'appointage 73 par rapport au chip 74 varie de 2*10⁻⁶ m à 5*10⁻⁶ m.

Le cantilever 18 est installé dans la première serre de précision 75 du cantilever 18 avec l'aide d'une première base 76, d'une deuxième base 77 avec un biais 78 et un élément à ressort 79. Les première 76 et deuxième 77 bases tout comme l'élément élastique 79 (par exemple, à ressort), sont fixés sur une première lame 80 (par exemple, à l'aide de vis, non représenté). Le montage et le démontage du cantilever 18 dans la première serre de précision 75 sont assurés par le mouvement du cantilever 18 dans le sens identifié à l'aide d'une flèche C sur la figure 11. Le déplacement du cantilever 18, lors de son montage, jusqu'au biais 11 peut être réalisé manuellement. La serre de précision 75 peut se présenter comme un module détaché et peut être fixée sur la deuxième tête de mesure 16. Pour cela un endroit de montage peut être agencé dans la deuxième tête 16 de mesure pour y fixer la première serre de précision 75 à l'aide de vis. Ce montage permet à l'appointage 73 de s'introduire très précisément (à environ 5*10⁻⁶ m) dans la zone d'analyse de l'échantillon 6, par exemple, suite à un remplacement par un nouveau, d'un cantilever 18 défaillant.

Comme illustré sur les figures 12-13, il est aussi possible de monter le cantilever 18 dans la deuxième serre de précision 81 du cantilever 18. La deuxième serre de précision 81 comprend une deuxième lame 82 sur laquelle sont fixés une troisième base 83 et une quatrième base 84 avec un biais 85, ainsi qu'un excentrique 86 avec un élément élastique 87 (par exemple, à base de viton). La fixation du cantilever 18 s'opère par l'élément élastique 87 grâce à l'excentrique 86. Dans le cas de son filetage à gauche (c'est-à-dire, lors de rotation senestrorsum suivant une flèche D sur la figure 12) le chip 74 du cantilever 18 est serré à la fois contre le biais 85 et contre la troisième base 83. Cela assure le montage rapide, ajusté et fiable du cantilever 18 dans la deuxième serre de précision 81.

Dans une des variantes, il est possible de coupler avec des entraînements mécanisés des homologues plus complexes des première 13 et deuxième 16 têtes de mesure, représentés sur la figure 14 par une tête complexe de mesure 93 (allongée suivant un axe privilégié E₁E₂). Dans ce cas, l'entraînement mécanisé comportant un moteur électrique 89 avec un réducteur 90, est fixé sur le guide 88 de la figure 14 (homologue du guide 10 de la figure 1). En outre, l'entraînement mécanisé comprend une vis, une écroue et un fixateur (non représentés). L'entraînement mécanisé interdit un déplacement angulaire d'un pousseur 91. Ce dernier réalise uniquement un coulissement linéaire le long du guide 88, parallèlement à l'axe privilégié E₁E₂ sur la figure 14. Le pousseur 91 peut être couplé avec une encoche 92 de la tête complexe 93 de mesure ce qui permet d'assurer à la fois le coulissement linéaire de la tête complexe 93 de mesure et son escamotage, par exemple, pour remplacer la pointe 15. Pour augmenter la fiabilité de travail un aimant 94 peut être disposé sur la tête complexe 93 de mesure assurant son serrage contre le guide 88. Le guide 88 peut être réalisé en matériau ferromagnétique pour attirer l'aimant 94 de manière certaine. Le guide 88 peut être équipé des capteurs 95 et 96 d'une première et d'une deuxième positions limites pour positionner la tête complexe 93 de mesure dans les première et deuxième positions limites (qui limitent une course de la tête complexe 93 de mesure suivant l'axe privilégié E₁E₂). Des capteurs optiques, des capteurs à lames souples ou des capteurs électriques d'impact peuvent être utilisés comme lesdits capteurs 95 et 96 des première et deuxième positions limites. Un signal d'arrêt est envoyé dans la première position limite par le capteur 95 de la première position limite suite à un court-circuit des premiers contacts 97 et 98 par un premier conducteur flexible 99 fixé sur la tête complexe 93 de mesure. Dans une autre (deuxième) position limite l'arrêt de la tête complexe 93 de mesure s'opère après un signal correspondant du capteur 96 de la deuxième position limite, grâce à un court-circuit des deuxièmes contacts 100 et 101 par une deuxième conducteur flexible 102 (qui est aussi fixé sur la tête complexe 93 de mesure). Autres éléments de structure de la tête complexe 93 de mesure illustrés sur la figure 14 sont similaires aux éléments de structure (décrits ci-dessus) des première 13 et deuxième 16 têtes de mesure (voir aussi la figure 1). Le moteur électrique 89 et les capteurs des première 95 et deuxième 96 positions limites sont électriquement liés avec le bloc de commande 30.

Le dispositif fonctionne de manière suivante. L'échantillon 6 (figure 1) est fixé sur le porte-objet 5. On pivote les première 13 et deuxième 16 têtes de mesure de la position initiale jusqu'à ce que les saillies 39 buttent contre les bords 40 (figures 2-3), les serres 14 et 17 vers le haut (suivant la flèche Z orientée, par exemple, à l'opposé de la pesanteur sur la figure 1) et on installe les sondes voulues. Les première 13 et deuxième 16 têtes de mesure sont remises dans la position initiale. On déplace la tête voulue (par exemple, la première tête 13 de mesure) jusqu'à ce qu'elle butte dans la première vis 34. On choisi la zone de mesures en utilisant les première 2 et deuxième 7 tables bicoordonnées et le microscope optique 8. On procède à l'approche de l'échantillon 6 avec la pointe 15 à une distance de ∼ 10⁻³ m de la zone de mesures en utilisant le bloc d'approche préliminaire 3. Ensuite, le positionnement spatial de la zone de mesures est ajusté à l'aide de première 2 et deuxième 7 tables bicoordonnées. Par la suite on procède à l'approche finale de l'échantillon 6 avec la pointe 15 et au balayage (dans le régime à effet tunnel), par la pointe 15, de la surface de l'échantillon 6 orientée vers la pointe 15.

Lorsque l'on travaille dans le régime à force atomique, après l'entrée de la deuxième tête 16 de mesure (figure 1) dans la zone de travail (jusqu'à la butée 12), le rayon laser émis par le laser 20, est pointé (à l'aide de l'entraînement automatisé du laser 20) sur le cantilever 18. Ensuite, le récepteur photoélectrique 25 est pointé (à l'aide d'entraînement du récepteur photoélectrique 25) sur le rayon laser correspondant reflété du cantilever 18. Par la suite, on procède à l'approche finale de l'échantillon 6 avec le cantilever 18 et au balayage (dans le régime à force atomique), par le cantilever 18, de la surface de l'échantillon 6 orientée vers le cantilever 18.

Pour changer le régime de travail (par exemple, pour changer le régime de mesures à force atomique contre le régime à effet tunnel), l'échantillon 6 est éloigné du cantilever 18 en utilisant le bloc d'approche préliminaire 3. On déplace la deuxième tête 16 de mesure dans la position limite la plus éloignée (dans la position limite droite de la deuxième tête 16 de mesure sur la figure 1) de la zone de mesures (de l'échantillon 6). La première tête 13 de mesure est déplacée dans la zone de mesures (jusqu'à la butée 12 sur la figure 1), puis, par analogie, on procède à l'approche de la pointe 15 avec l'échantillon 6 et au balayage, par la pointe 15, de la surface de l'échantillon 6 orientée vers la pointe 15 (dans le régime à effet tunnel).

Le laser 20 et le récepteur photoélectrique 25 ne sont généralement pas utilisés lors des mesures à l'aide de la première (à effet tunnel) tête 13 de mesure, dans le régime à effet tunnel.

Le module 45 à liquide (figure 4) est disposé dans le capteur 42 lorsque les première 13 et deuxième 16 têtes de mesure sont écartées dans les directions différentes (figure 1).

Le récipient 49 est fixé sur le porte-objet 5, l'échantillon 6 est disposé dans le récipient 49, on coule le liquide et on procède aux mesures dans le régime à force atomique, à l'aide de la sonde, c'est-à-dire à l'aide du cantilever 48 pour les mesures dans le liquide comme décrit ci-dessus. La tension peut être amenée du bloc 30 à la patte de serrage conductive lors de mesures dans le régime électrochimique.

Par analogie avec le module 45 à liquide, on dispose le module de mesure de dureté 53 sur le plateau 9 dans le capteur 42 et on procède à l'approche de l'échantillon 6 avec la pointe 57. Par la suite, on procède au balayage à l'aide de résonateur à quartz 56 et on mesure la dureté de l'échantillon 6. L'amplitude des oscillations du résonateur à quartz 56 (transmise en forme d'un signal vers le bloc 30 et capté par lui) évolue avec la dureté de la zone mesurée (de la surface de l'échantillon orientée vers la pointe 57).

Le travail du bloc de chauffe 59 consiste en une amenée du courant en provenance du bloc 30 vers la spirale 60, en fonction de la température prédéterminée qui est mesurée par le thermocouple 62. De manière alternative, la température de l'échantillon peut être mesurée à distance par le mesureur de température sans contact 63 (un pyromètre optique ou un thermomètre infrarouge) qui est également adapté au tarage du thermocouple 62. La méthode de fixation respectivement de la pointe 15 dans la serre de précision 65 (figure 7-8) et du cantilever 18 dans les première ou, de manière alternative à cette dernière, deuxième 81 serres de précision (figures 9-13), a été détaillée ci-dessus est omis ici pour éviter les redites.

La spécificité du fonctionnement de la tête complexe (mécanisée) 93 de mesure est liée avec le choix de la grosseur des première 99 et deuxième 102 conducteurs flexibles et avec son ajustage. Ils peuvent être fabriqués en bronze béryllium.

Pour réduire la probabilité d'amorçage de l'arc (étincelles) lors des connexions électriques, le premier conducteur 99 touche les premiers contacts 97, 98 l'un après l'autre, c'est-à-dire, de manière non simultanée. Par exemple, le premier conducteur 99 touche d'abord l'un des premiers contacts référencé 97 sur la figure 14 et seulement ensuite, après un premier temps de relaxation T₁ prédéterminé, touche l'autre des premiers contacts référencé 98 sur la figure 14, pour, au final, court-circuiter les premiers contacts 97, 98, l'un avec l'autre, pratiquement sans amorcer les étincelles. Pour cela, les premiers contacts 97, 98 sont écartés l'un de l'autre, suivant l'axe privilégié E₁E₂, à une distance prédéterminée, par exemple, de 0,1*10⁻³ m à 0,2*10⁻³ m. Ce même objectif peut être atteint par une courbure sélective d'une amplitude adéquate du premier conducteur flexible 99 dans un plan comprenant l'axe privilégié E₁E₂.

Par analogie, pour réduire la probabilité d'amorçage des étincelles lors des connexions électriques, le deuxième conducteur flexible touche les deuxièmes contacts 100, 101 l'un après l'autre, c'est-à-dire, de manière non simultanée. Par exemple, le deuxième conducteur flexible 102 touche d'abord l'un des deuxièmes contacts référencé 100 sur la figure 14 et seulement ensuite, après un deuxième temps de relaxation T₂ prédéterminé, touche l'autre des deuxièmes contacts référencé 101 sur la figure 14, pour, au final, court-circuiter les deuxièmes contacts 100, 101, l'un avec l'autre, pratiquement sans amorcer les étincelles. Pour cela les deuxièmes contacts 100, 101 sont écartés l'un de l'autre, suivant l'axe privilégié E₁E₂, à une distance prédéterminée, par exemple, de 0,1*10⁻³ m à 0,2*10⁻³ m. Ce même objectif peut être atteint par une courbure sélective d'une amplitude adéquate du deuxième conducteur flexible 99 dans un plan comprenant l'axe privilégié E₁E₂.

En outre, un revêtement en or peut être enduit sur les premier 99 et deuxième 102 conducteurs flexibles ainsi que sur les premiers 97, 98 et deuxièmes 100, 101 contacts pour augmenter la fiabilité de fonctionnement du dispositif.

La réalisation du bloc optique 29 à l'aide du laser 20 et du récepteur photoélectrique 25 mobiles sur les premiers 21 et deuxième 26 guides bicoordonnées respectivement, ainsi que l'équipement du plateau 9 avec les premier 10 et deuxième 11 guides munis des première 13 et deuxième 16 têtes de mesure présentant un couplage optique avec le laser 20 et le récepteur photoélectrique 25 élargit les possibilités fonctionnelles du dispositif grâce au changement rapide des régimes de travail.

L'utilisation de la deuxième table 7 bicoordonnée avec le microscope optique 8 permet de choisir le champ de mesure. En plus, il est possible de changer rapidement la zone de mesure grâce aux butées 12 avec les premières vis mobiles 34. Dans ce cas la deuxième table 7 bicoordonnée permet à un opérateur de MCP de trouver plus rapidement et plus facilement une nouvelle zone de mesure à l'aide du microscope optique 8. Aussi, cela élargit les possibilités fonctionnelles du dispositif.

Le recours au pivotement des première 13 et deuxième 16 têtes de mesure autour des tiges cylindriques 31 (par rapport aux premier 10 et deuxième 11 guides respectivement) assure un prompt chargement des sondes ce qui permet de changer rapidement les régimes de travail.

L'emploi du module 45 à liquide et du module 53 de mesure de dureté élargit les possibilités fonctionnelles du dispositif.

L'utilisation simultanée d'une paire de premières 13 (par exemple, à effet tunnel) ou d'une paire de deuxièmes 16 (par exemple, à force atomique) têtes de mesure élargit les possibilités fonctionnelles des mesures du même type. Par exemple, il est possible de passer d'un cantilever électroconductif vers un cantilever non électroconductif.

Le bloc de chauffe 59 rapidement remplaçable et adaptée à être utiliser quel que soit le régime de travail, offre une information supplémentaire à propos des objets (échantillons 6).

L'incorporation dans le bloc de chauffe 59 à la fois du thermocouple 62 et du mesureur de température sans contact 63, permet de procéder au tarage du thermocouple ce qui facilite l'utilisation de l'instrument.

Le recours, dans la serre de précision 65 de la pointe 15, aux vis 69 avec le filetage à droite ou à gauche, avec le côté 70 (en particulier, avec la surface du côté 70 orientée vers la pointe 15) spécialement traité, ainsi qu'avec l'axe longitudinal KP translaté par rapport à la directrice centrale BH de la rigole 66 en forme de V, permet de réaliser la mise de la pointe 15 dans la position de travail avec une précision déterminée au préalable.

Le recours, dans la première serre de précision 75 du cantilever 18, à la première base 76, à la deuxième base 77 avec le biais 78 et à l'élément à ressort 79, permet de réaliser la mise du cantilever 18 dans la position de travail avec une précision déterminée au préalable.

Le recours, dans la deuxième serre de précision 81 du cantilever 18, à la troisième base 83, à la quatrième base 84 avec le biais 85 et à l'excentrique 86 avec l'élément élastique 87, permet de réaliser la mise du cantilever 18 dans la position de travail avec une précision déterminée au préalable, sans danger pour la console 72 flexible.

La mise en place facile et rapide des pointes 15 et des cantilevers 18 assure le changement rapide des régimes de travail de MCP.

Les entraînement mécanisés des première 13 et deuxième 16 têtes de mesure facilitent davantage l'exploitation de l'instrument.

## Revendications

1. Microscope en champ proche multifonctionnel comprenant :
- un soubassement (1),
- un piézoscanneur (4),
- un échantillon (6) comprenant une zone de mesures (M) et fixé sur le piézoscanneur (4),
- un plateau (9) fixé sur le soubassement (1) en regard de l'échantillon (6),
- un analyseur disposé sur le plateau (9) et comprenant une première tête de mesure (13) orientée vers l'échantillon (6) et adaptée à sonder la zone de mesures (M) de l'échantillon (6),
**caractérisé en ce qu'**il comprend :
- un bloc d'approche préliminaire (3) disposé mobile sur le soubassement (1),
- un porte-objet (5) disposé sur le piézoscanneur (4),
- un premier (10) et un deuxième (11) guides fixés sur le plateau (9),
**en ce que** le piézoscanneur (4) est disposé sur le bloc d'approche préliminaire (3),
**en ce que** l'échantillon (6) est fixé sur le piézoscanneur (4) à l'aide du porte-objet (5),
**en ce que** l'analyseur comprend une deuxième tête de mesure (16) orientée vers l'échantillon (6) et adaptée à sonder la zone de mesures (M) de l'échantillon (6),
**en ce que** la première (13) et la deuxième (16) têtes de mesure sont disposées mobiles respectivement sur le premier (10) et le deuxième (11) guides, et
**en ce que** la première (13) et la deuxième (16) têtes de mesure sont mobiles l'une par rapport à l'autre et sont liées à un bloc de commande (30).

2. Microscope en champ proche multifonctionnel selon la revendication 1, **caractérisé en ce qu'**il comprend un bloc optique (29) fixé sur le soubassement (1) et comprenant :
- un module laser (19),
- des premiers guides bicoordonnés (21) orientés vers l'échantillon (6) et fixés sur le module laser (19),
- un laser (20) disposé mobile sur les premiers guides bicoordonnés (21) et pouvant présenter un couplage optique avec la zone de mesures (M) de l'échantillon (6),
- un module de réception (24),
- des deuxièmes guides bicoordonnés (26) orientés vers l'échantillon (6) et fixés sur le module de réception (24),
- un récepteur photoélectrique (25) disposé mobile sur les deuxièmes guides bicoordonnés (26) et pouvant présenter un couplage optique avec la zone de mesures (M) de l'échantillon (6).

3. Microscope en champ proche multifonctionnel selon la revendication 1 ou 2, **caractérisé en ce qu'**il comprend :
- une première table bicoordonnée (2) liant le module d'approche préliminaire (3) au soubassement (1),
- une deuxième table bicoordonnée (7), et
- un microscope optique (8) fixé sur la deuxième table bicoordonnée (7).

4. Microscope en champ proche multifonctionnel selon l'une quelconque des revendications 1 à 3, **caractérisé en ce que** le plateau (9) comprend des butées (12) avec des vis mobiles (34), et **en ce que** les première (13) et deuxième (16) têtes de mesure sont adaptées à :
- coulisser linéairement le long du premier (10) et du deuxième (11) guides respectivement jusqu'aux butées (12), et/ou
- se déplacer de manière radiale par rapport au premier (10) et au deuxième (11) guides respectivement.

5. Microscope en champ proche multifonctionnel selon l'une quelconque des revendications 1 à 4, **caractérisé en ce qu'**il comprend :
- un module (45) à liquide,
- un récipient (49) avec un liquide,
- un capteur (42), et
**en ce que** le capteur (42) est disposé sur le plateau (9), le module (45) à liquide est disposé de manière orientée sur le capteur (42), le récipient (49) avec le liquide est fixé sur le porte-objet (5) et est lié avec l'analyseur.

6. Microscope en champ proche multifonctionnel selon l'une quelconque des revendications 1 à 4, **caractérisé en ce qu'**il comprend un module (53) de mesure de dureté disposé de manière orientée sur le capteur (42).

7. Microscope en champ proche multifonctionnel selon l'une quelconque des revendications 1 à 6, **caractérisé en ce que** les première (13) et deuxième (16) têtes de mesure simultanément disposées sur les premier (10) et deuxième (11) guides respectivement, sont les têtes d'au moins un des types mentionnés ci-après : (a) tête à effet tunnel dans laquelle la sonde est réalisée en forme d'une pointe (15) et le support de la sonde est réalisé en forme d'une serre (14) de la pointe (15) ; (b) tête à force atomique dans laquelle la sonde est réalisée en forme d'un cantilever (18) et le support de la sonde est réalisé en forme d'une serre (17) du cantilever (18).

8. Microscope en champ proche multifonctionnel selon l'une quelconque des revendications 1 à 7, **caractérisé en ce qu'**il comprend :
- un bloc de chauffe (59),
- un thermocouple (62),
- un mesureur de température (63) sans contact, et
**en ce que** le bloc de chauffe (59) est disposé sur le porte-objet (5), le thermocouple (62) est fixé sur le bloc de chauffe (59), le mesureur de température (63) sans contact est couplé de manière optique avec l'échantillon (6).

9. Microscope en champ proche multifonctionnel selon l'une quelconque des revendications 1 à 8, **caractérisé en ce qu'**il y est introduit une serre de précision (65) de la pointe (15) comprenant :
- un bras support (67) avec une rigole (66) en forme de V prolongée suivant une directrice centrale (BH) et présentant des microrugosités d'une première grandeur prédéterminée,
- une vis (69) prolongée selon un axe longitudinal (KP) disposée dans le bras support (67) et liée avec la rigole (66) en forme de V.

10. Microscope en champ proche multifonctionnel selon la revendication 9, **caractérisé en ce que** la vis (69) a un filetage à droite, et **en ce que** l'axe longitudinal (KP) de la vis (69) est translaté par rapport à la directrice centrale (BH) de la rigole (66) en forme de V.

11. Microscope en champ proche multifonctionnel selon la revendication 9, **caractérisé en ce que** la vis (69) a un filetage à gauche, et **en ce que** l'axe longitudinal (KP) de la vis (69) est translaté par rapport à la directrice centrale (BH) de la rigole (66) en forme de V.

12. Microscope en champ proche multifonctionnel selon l'une quelconque des revendications 9 à 11, **caractérisé en ce que** la vis (69) comprend un côté (70), la surface limite duquel présente des microrugosités d'une deuxième grandeur prédéterminée supérieure à la première grandeur prédéterminée propre aux microrugosités de la rigole (66) en forme de V.

13. Microscope en champ proche multifonctionnel selon l'une quelconque des revendications 1 à 12, **caractérisé en ce qu'**il y est introduit une première serre de précision (75) du cantilever (18) comprenant :
- une première base (76),
- une deuxième base (77) avec un biais (78),
- une première lame (80),
- un élément à ressort (79), et
**en ce que**
- la première base (76), la deuxième base (77) avec le biais (78) et l'élément à ressort (79) sont fixés sur la première lame et sont adaptés à interagir avec le cantilever (18),
- l'élément à ressort (79) est disposé en regard de la première base (76).

14. Microscope en champ proche multifonctionnel selon l'une quelconque des revendications 1 à 12, **caractérisé en ce qu'**il y est introduit une deuxième serre de précision (81) du cantilever (18) comprenant :
- une troisième base (83),
- une quatrième base (84) avec un biais (85),
- une deuxième lame (82),
- un excentrique (86) avec un élément élastique (87), et
**en ce que**
- la troisième base (83), la quatrième base (84) avec le biais (85) et l'excentrique (86) avec l'élément élastique (87) sont fixés sur la deuxième lame (82) et sont adaptés à interagir avec le cantilever (18),
- l'excentrique (86) est disposé sur la deuxième lame (82) en regard de la quatrième base (84) avec le biais (85).

15. Microscope en champ proche multifonctionnel selon l'une quelconque des revendications 1 à 14, **caractérisé en ce que** la première (13) et la deuxième (16) têtes de mesure comprennent des entraînements mécanisés.

## Patentansprüche

1. Multifunktionales Nahfeldmikroskop, mit:
- einem Sockel (1),
- einem Piezo-Scanner (4),
- einer Probe (6) mit einem Messbereich (M) und fixiert auf dem Piezo-Scanner (4),
- einer Platte (9), die auf dem Sockel (1) in Bezug zu der Probe (6) fixiert ist,
- einem Analysator, der auf der Platte (9) angeordnet ist und einen ersten Messkopf (13) aufweist, der in Richtung der Probe (6) gerichtet und so ausgebildet ist, dass dieser den Messbereich (M) der Probe (6) sondiert, **dadurch gekennzeichnet, dass** dieses umfasst:
- einen Vor-Annäherungsblock (3), der beweglich auf dem Sockel (1) angeordnet ist,
- einen Objektträger (5), der auf dem Piezo-Scanner (4) angeordnet ist,
- eine erste (10) und eine zweite (11) Führung, die auf der Platte (9) fixiert
sind,
dass der Piezo-Scanner (4) auf dem Vor-Annäherungsblock (3) angeordnet ist,
dass die Probe (6) auf dem Piezo-Scanner (4) mithilfe des Objektträgers (5) befestigt ist,
dass der Analysator einen zweiten Messkopf (16) umfasst, der in Richtung der Probe (6) gerichtet ist und so ausgebildet ist, dass dieser einen Messbereich (M) der Probe (6) sondiert,
dass der erste (13) und der zweite (16) Messkopf relativ zu der ersten (10) und der zweiten (11) Führung beweglich angeordnet sind, und
dass der erste (13) und der zweite (16) Messkopf einander gegenüber beweglich sind und mit einem Steuerblock (30) verbunden sind.

2. Multifunktionales Nahfeldmikroskop nach Anspruch 1, **dadurch gekennzeichnet, dass** dieses einen Optikblock (29) umfasst, der auf dem Sockel (1) befestigt ist und umfasst:
- ein Lasermodul (19),
- erste bi-koordinierte Führungen (21), die in Richtung der Probe (6) orientiert sind und auf dem Lasermodul (19) befestigt sind,
- einen Laser (20), der beweglich auf den ersten bi-koordinierten Führungen (21) angeordnet ist und eine optische Kopplung mit dem Messbereich (M) der Probe (6) präsentieren kann,
- ein Empfangsmodul (24),
- zweite bi-koordinierte Führungen (26), die in Richtung der Probe (6) orientiert sind und auf dem Empfangsmodul (24) befestigt sind,
- einen fotoelektrischen Empfänger (25), der beweglich auf den zweiten bi-koordinierten Führungen (26) angeordnet ist und eine optische Kopplung mit dem Messbereich (M) der Probe (6) präsentieren kann.

3. Multifunktionales Nahfeldmikroskop nach Anspruch 1 oder 2, **dadurch gekennzeichnet, dass** dieses umfasst:
- einen ersten Bi-Koordinatentisch (2), der mit dem Vor-Annäherungsmodul (3) am Sockel (1) verbunden ist,
- einen zweiten Bi-Koordinatentisch (7), und
- ein optisches Mikroskop (8), das auf dem zweiten Bi-Koordinatentisch (7) befestigt ist.

4. Multifunktionales Nahfeldmikroskop nach einem der Ansprüche 1 bis 3, **dadurch gekennzeichnet, dass** die Platte (9) Anschläge (12) mit beweglichen Schrauben (34) umfasst, und dass der erste (13) und der zweite (16) Messkopf so ausgebildet sind, dass sie sich:
- linear entlang der ersten (10) und der zweiten (11) Führung jeweils bis zu den Anschlägen (12) verschieben, und/oder
- sich radial in Bezug zu der ersten (10) bzw. der zweiten (11) Führung verstellen.

5. Multifunktionales Nahfeldmikroskop nach einem der Ansprüche 1 bis 4, **dadurch gekennzeichnet, dass** dieses umfasst:
- ein Flüssigkeitsmodul (45),
- ein Behältnis (49) mit einer Flüssigkeit,
- einen Messfühler (42), und
dass der Messfühler (42) auf der Platte (9) angeordnet ist, das Flüssigkeitsmodul (45) in orientierter Weise auf dem Messfühler (42) angeordnet ist, das Behältnis (49) mit der Flüssigkeit auf dem Objektträger (5) befestigt ist und mit dem Analysator verbunden ist.

6. Multifunktionales Nahfeldmikroskop nach einem der Ansprüche 1 bis 4, **dadurch gekennzeichnet, dass** dieses ein Modul (53) zur Härtemessung umfasst, das in orientierter Weise auf dem Messfühler (42) angeordnet ist.

7. Multifunktionales Nahfeldmikroskop nach einem der Ansprüche 1 bis 6, **dadurch gekennzeichnet, dass** der erste (13) und der zweite (16) Messkopf, die gleichzeitig auf der ersten (10) bzw. zweiten (11) Führung angeordnet sind, Köpfe wenigstens eines der nachfolgend genannten Typen sind: (a) Tunneleffekt-Kopf, in welchem die Sonde in Form einer Spitze (15) ausgeführt ist und der Sondenhalter in Form einer Klammer (14) für die Spitze (15) ausgeführt ist; (b) Rasterkraftkopf, in welchem die Sonde in Form eines Hebels (18) ausgeführt ist und der Sondenträger in Form einer Klammer (17) für den Hebel (18) ausgeführt ist.

8. Multifunktionales Nahfeldmikroskop nach einem der Ansprüche 1 bis 7, **dadurch gekennzeichnet, dass** dieses umfasst:
- einen Heizblock (59),
- eine Wärmekopplung (62),
- einen kontaktlosen Temperaturfühler (63), und
**dadurch gekennzeichnet, dass** der Heizblock (59) auf dem Objektträger (5) angeordnet ist, die Wärmekopplung (62) auf dem Heizblock (59) befestigt ist und der kontaktlose Temperaturfühler (63) optisch mit der Probe (6) gekoppelt ist.

9. Multifunktionales Nahfeldmikroskop nach einem der Ansprüche 1 bis 8, **dadurch gekennzeichnet, dass** in dieses eine Präzisionsklammer (65) für die Spitze (15) eingeführt ist, mit:
- einem Stützarm (67) mit einer Rigole (66) in Form eines V, die sich in einer zentralen Richtung (BH) erstreckt und Mikrorauigkeiten in einer vorbestimmten ersten Größe aufweist,
- einer Schraube (69), die sich in einer Längsachse (KP) erstreckt, in dem Stützarm (67) angeordnet ist und mit der V-förmigen Rigole (66) verbunden ist.

10. Multifunktionales Nahfeldmikroskop nach Anspruch 9, **dadurch gekennzeichnet, dass** die Schraube (69) ein Rechtsgewinde hat, und dass die Längsachse (KP) mit der Schraube (69) in Bezug zu der zentralen Richtung (BH) der V-förmigen Rigole (66) verschoben ist.

11. Multifunktionales Nahfeldmikroskop nach Anspruch 9, **dadurch gekennzeichnet, dass** die Schraube (69) ein Linksgewinde hat, und dass die Längsachse (KP) der Schraube (69) in Bezug zu der zentralen Richtung (BH) der V-förmigen Rigole (66) verschoben ist.

12. Multifunktionales Nahfeldmikroskop nach einem der Ansprüche 9 bis 11, **dadurch gekennzeichnet, dass** die Schraube (69) eine Seite (70) aufweist, deren Grenzfläche Mikrorauigkeiten einer vorbestimmten zweiten Größe aufweist, die größer als die vorbestimmte erste Größe der Mikrorauigkeiten der V-förmigen Rigole (66) sind.

13. Multifunktionales Nahfeldmikroskop nach einem der Ansprüche 1 bis 12, **dadurch gekennzeichnet, dass** in dieses eine erste Präzisionsklammer (75) des Hebels (18) eingeführt ist, mit:
- einer ersten Basis (76),
- einer zweiten Basis (77) mit einer Schräge (78),
- einer ersten Lamelle (80),
- einem Federelement (79), und
dadurch, dass
- die erste Basis (76) und die zweite Basis (77) mit der Schräge (78) und das Federelement (79) auf der ersten Lamelle befestigt sind und so ausgebildet sind, dass sie mit dem Hebel (18) interagieren,
- das Federelement (79) gegenüber der ersten Basis (76) angeordnet ist.

14. Multifunktionales Nahfeldmikroskop nach einem der Ansprüche 1 bis 12, **dadurch gekennzeichnet, dass** in dieses eine zweite Präzisionsklammer (81) des Hebels (18) eingeführt ist, mit:
- einer dritten Basis (83),
- einer vierten Basis (84) mit einer Schräge (85),
- einer zweiten Lamelle (82),
- einem Exzenter (86) mit einem elastischen Element (87) und
dadurch, dass
- das dritte Blatt (83), das vierte Blatt (84) mit der Schräge (85) und der Exzenter (86) mit dem elastischen Element (87) auf der zweiten Lamelle (82) befestigt sind und so ausgebildet sind, dass sie mit dem Hebel (18) interagieren,
- der Exzenter (86) auf der zweiten Lamelle (82) gegenüber der vierten Basis (84) mit der Schräge (85) angeordnet ist.

15. Multifunktionales Nachfeldmikroskop nach einem der Ansprüche 1 bis 14, **dadurch gekennzeichnet, dass** der erste (13) und der zweite (16) Messkopf mechanische Antriebe umfassen.

## Claims

1. Multifunctional scanning probe microscope, which comprises:
- a base (1),
- a piezo-scanner (4),
- a sample (6), comprising a measuring area (M) and fastened to the piezo-scanner (4),
- a platform (9), fastened to the base (1) opposite the sample (6),
- an analyzer, mounted on the platform (9) and comprising a first measuring head (13), oriented toward the sample (6) and adapted for probing the measuring area (M) of the sample (6),
**characterised in that** it comprises:
- a preliminary approach unit (3), movably mounted on the base (1),
- an object holder (5), disposed on the piezo-scanner (4),
- first (10) and second (11) guides, fastened to the platform (9),
**in that** the piezo-scanner (4) is disposed on the preliminary approach unit (3),
**in that** the sample (6) is fastened to the piezo-scanner (4) with the aid of the object holder (5),
**in that** the analyzer comprises a second measuring head (16), oriented toward the sample (6) and adapted for probing the measuring area (M) of the sample (6),
**in that** the first (13) and the second (16) measuring heads are movably mounted, respectively, on the first (10) and the second (11) guides, and
**in that** the first (13) and the second (16) measuring heads are movable relative to each other and are connected with a control unit (30).

2. Multifunctional scanning probe microscope according to claim 1, **characterised in that** it comprises an optical unit (29), fastened to the base (1) and including:
- a laser module (19),
- first two-coordinate guides (21), oriented toward the sample (6) and fastened to the laser module (19),
- a laser (20), movably mounted on the first two-coordinate guides (21) and that can be optically linked with the measuring area (M) of the sample (6),
- a receiving module (24),
- second two-coordinate guides (26), oriented toward the sample (6) and fastened to the receiving module (24),
- a photoelectric receiver (25), movably mounted on the second two-coordinate guides (26) and that can be optically linked with the measuring area (M) of the sample (6).

3. Multifunctional scanning probe microscope according to claim 1 or 2, **characterised in that** it comprises:
- a first two-coordinate table (2), connecting the preliminary approach unit (3) with the base (1),
- a second two-coordinate table (7), and
- an optical microscope (8), fastened to the second two-coordinate table (7).

4. Multifunctional scanning probe microscope according to any one of claims 1 to 3, **characterised in that** the platform (9) comprises stops (12) with mobile screws (34), and **in that** the first (13) and second (16) measuring heads are adapted to:
- linearly move along the first (10) and the second (11) guides, respectively, to the stops (12), and/or
- radially move relative to the first (10) and the second (11) guides, respectively.

5. Multifunctional scanning probe microscope according to any one of claims 1 to 4, **characterised in that** it comprises:
- a fluid module (45),
- a fluid reservoir (49),
- a catch (42), and
**in that** the catch (42) is mounted on the platform (9), the fluid module (45) is orientedly mounted on the catch (42), the fluid reservoir (49) is fastened to the object holder (5) and is connected with the analyzer.

6. Multifunctional scanning probe microscope according to any one of claims 1 to 4, **characterised in that** it comprises a hardness measurement module (53), orientedly mounted on the catch (42).

7. Multifunctional scanning probe microscope according to any one of claims 1 to 6, **characterised in that** the first (13) and second (16) measuring heads, simultaneously mounted on the first (10) and second (11) guides, respectively, are heads of at least one of the types mentioned below: (a) tunnel head, in which the probe is made in the form of a needle (15), and the probe holder is made in the form of a hold (14) of the needle (15); (b) atomic power head, in which the probe is made in the form of a cantilever (18), and the probe holder in the form of a hold (17) of the cantilever (18).

8. Multifunctional scanning probe microscope according to any one of claims 1 to 7, **characterised in that** it comprises:
- a warming unit (59),
- a thermocouple (62),
- a noncontact temperature gauge (63), and
**in that** the warming unit (59) is mounted on the object holder (5), the thermocouple (62) is fastened to the warming unit (59), the noncontact temperature gauge (63) is optically linked with the sample (6).

9. Multifunctional scanning probe microscope according to any one of claims 1 to 8, **characterised in that** is introduced in it a precise hold (65) of the needle (15) comprising:
- a bracket (67) with a V-shaped groove (66), extended along a central guide (BH) and having microroughnesses of a predetermined first size,
- a screw (69), extended along a longitudinal axis (KR), mounted in the bracket (67) and connected with the V-shaped groove (66).

10. Multifunctional scanning probe microscope according to claim 9, **characterised in that** the screw (69) has a right-handed thread, and **in that** the longitudinal axis (KR) of the screw (69) is offset relative to the central guide (BH) of the V-shaped groove (66).

11. Multifunctional scanning probe microscope according to claim 9, **characterised in that** screw (69) has a left-handed thread, and **in that** the longitudinal axis (KR) of the screw (69) is offset relative to the central guide (BH) of the V-shaped groove (66).

12. Multifunctional scanning probe microscope according to any one of claims 9 to 11, **characterised in that** the screw (69) comprises an end (70), whose marginal surface has microroughnesses of a predetermined second size greater in comparison with the first size of the microroughnesses of the V-shaped groove (66).

13. Multifunctional scanning probe microscope according to any one of claims 1 to 12, **characterised in that** is introduced in it a first precise hold (75) of the cantilever (18) comprising:
- a first support (76),
- a second support (77) with a bevel (78),
- a first plate (80),
- a spring element (79), and
**in that**
- the first support (76), the second support (77) with the bevel (78) and the spring element (79) are fastened to the first plate and are adapted to interact with the cantilever (18),
- the spring element (79) is mounted opposite the first support (76).

14. Multifunctional scanning probe microscope according to any one of claims 1 to 12, **characterised in that** is introduced in it a second precise hold (81) of the cantilever (18) comprising:
- a third support (83),
- a fourth support (84) with a bevel (85),
- a second plate (82),
- a cam (86) with an elastic element (87), and
**in that**
- the third support (83), the fourth support (84) with the bevel (85) and the cam (86) with the elastic element (87) are fastened to the second plate (82) and are adapted to interact with the cantilever (18),
- the cam (86) is mounted on the second plate (82) opposite the fourth support (84) with the bevel (85).

15. Multifunctional scanning probe microscope according to any one of claims 1 to 14, **characterised in that** the first (13) and the second (16) measuring heads comprise mechanized drives.
